# EUROPEAN PATENT SPECIFICATION

(11) **EP 4 036 546 B1**
(45) Date of publication and mention of the grant of the patent: **20.12.2023**
(21) Application number: 22153606.3
(22) Date of filing: 27.01.2022
(51) Int. Cl.: G01M 3/20

(54) **LEAKAGE DETECTION APPARATUS AND LEAKAGE DETECTION METHOD**
LECKAGEDETEKTIONSVORRICHTUNG UND LECKAGEDETEKTIONSVERFAHREN
APPAREIL DE DÉTECTION DE FUITE ET PROCÉDÉ DE DÉTECTION DE FUITE

(30) Priority: 29.01.2021 CN 202110125044
(43) Date of publication of application: 03.08.2022
(73) Proprietor: Huawei Digital Power Technologies Co., Ltd., Shenzhen, 518043 (CN)
(72) Inventor: LI, Jian, Shenzhen, 518129, P. R. (CN); PU, Mingming, Shenzhen, 518129, P. R. (CN); ZHU, Chaonan, Shenzhen, 518129, P. R. (CN)
(74) Representative: Gill Jennings & Every LLP

(56) References cited:
- EP-A1- 1 608 942
- EP-A2- 0 219 250
- EP-A2- 1 471 342
- EP-B1- 1 608 942
- CN-B- 101 408 466
- CN-B- 102 539 081
- GB-A- 2 153 089
- US-A- 3 425 264
- US-A1- 2009 145 200

## Description

### TECHNICAL FIELD

This application relates to the field of leakage detection technologies of a heat exchanger core, and in particular, to a leakage detection apparatus and a leakage detection method.

### BACKGROUND

A heat exchanger core is a core component of an indirect evaporative cooling system. Heat is exchanged between hot air and cold air through different flow channels inside the heat exchanger core. Because different flow channels are isolated from each other, the hot air and the cold air are not in contact with each other in a heat exchange process, to obtain high heat exchange efficiency. Before delivery of the heat exchanger core, water is generally injected into one flow channel (for example, a hot flow channel for circulating the hot air) to observe whether water leaks from another flow channel (for example, a cold flow channel for circulating the cold air), so as to detect whether leakage occurs between the cold flow channel and the hot flow channel of the heat exchanger core. Because collision easily occurs in a transportation or mounting process or for another reason, a leakage point is generated in the heat exchanger core. However, after the heat exchanger core is mounted on a use site, it is inconvenient to perform detection through water injection.

US3425264A describes a method and apparatus for detecting a leak in a heat exchanger. A plurality of pipelines are connected between a pair of headers. The pipelines are surrounded by an atmosphere of a gaseous tracer medium and samples of flow are removed from each of the pipelines between the headers. A detector is used to detect the samples of gas flow removed from the pipeline to detect leaks therein. In one example, the atmosphere of the gaseous tracer medium is in a tank connected by ducts to a heat vehicle circuit, and the interior of the tank is connected to a source of the tracer medium via a pressure control valve. Additionally, in the example, a further system of pipes is connected to one of the headers, wherein each pipe of the further system of pipes is connected to a tracer medium detector via a respective valve.

Further examples of leakage detection technologies for heat exchangers are described in CN102539081B, US2009/145200A1, WO2004/088269A1, EP0219250A2, and CN101408466B.

### SUMMARY

Embodiments of this application provide a leakage detection apparatus and a leakage detection method, to facilitate leakage detection on a heat exchanger core.

According to a first aspect, this application provides a leakage detection apparatus as set out in claim 1.

In a heat exchange process of the heat exchanger core, the first flow channel and the second flow channel are used to circulate and diffuse gas at different temperatures. For example, the first flow channel is used to diffuse and circulate hot air, and the second flow channel is used to diffuse and circulate cold air. The tracer gas concentration in the second flow channel of the heat exchanger core is a tracer gas concentration of tracer gas diffused and circulated in the second flow channel.

According to the leakage detection apparatus provided in the first aspect, the gas releaser provides the tracer gas (actively releases the tracer gas) to the first flow channel, so that the tracer gas is diffused and circulated in the first flow channel, and then the gas sensor tracks and detects the tracer gas concentration of the tracer gas diffused and circulated in the second flow channel. If a leakage point exists in the heat exchanger core, the tracer gas concentration detected by the gas sensor is greater than the concentration threshold. If no leakage point exists in the heat exchanger core, the gas sensor can detect no tracer gas.

The leakage detection apparatus does not need to inject water into the heat exchanger core. Instead, the gas releaser actively releases the tracer gas into the first flow channel, and then the gas sensor automatically monitors the tracer gas concentration in the second flow channel of the heat exchanger core. Therefore, the leakage detection apparatus can still perform leakage detection on the heat exchanger core on a use site of the heat exchanger core. This greatly facilitates leakage detection on the heat exchanger core and improves leakage detection efficiency.

There are a plurality of detection points, so that accuracy of leakage detection performed by the leakage detection apparatus on the heat exchanger core is improved.

The leakage detection apparatus further includes a positioner disposed on the gas sensor, and the positioner is configured to: find a position of the detection point of the gas sensor, and feed back the position to the controller; and the controller is further configured to identify, as a position of the leakage point, a position of a detection point at which a detected tracer gas concentration is greater than the concentration threshold, to determine a position of the second flow channel in which the leakage point exists. The leakage detection apparatus can detect that a leakage point exists in the heat exchanger core, and can also determine the position of the second flow channel in which the leakage point exists, to facilitate maintenance by a user.

According to the first aspect, in a first implementation of this application, the controller is further configured to record detection time at which the gas sensor detects the tracer gas concentration at each detection point; and when determining that a leakage point exists in the heat exchanger core, the controller is further configured to determine, based on the tracer gas concentrations at the plurality of detection points and detection time at the plurality of detection points, a position of the second flow channel in which the leakage point exists. A relational model in which a tracer gas concentration varies with time is established based on the tracer gas concentrations at the plurality of detection points and the detection time at the plurality of detection points. The position of the second flow channel in which the leakage point exists is determined by using a difference between tracer gas concentrations detected at different detection points. This simplifies a structure and steps of the leakage detection apparatus, and facilitates leakage detection.

According to the first aspect or the first implementation of the first aspect of this application, in a second implementation of this application, the controller is further configured to control the gas sensor to move on the side surface of the heat exchanger core that is provided with the opening of the second flow channel. In other words, the gas sensor is movably disposed on the side surface of the heat exchanger core that is provided with the opening of the second flow channel, so that the gas sensor conveniently performs detection at a plurality of detection points. This improves leakage detection flexibility and improves leakage detection efficiency.

According to the first aspect or the first to the second implementations of the first aspect of this application, in a third implementation of this application, the controller is further configured to control the gas releaser to move on a side surface of the heat exchanger core that is provided with an opening of the first flow channel. In other words, the gas releaser is movably disposed on the side surface of the heat exchanger core that is provided with the opening of the first flow channel, so that the gas releaser conveniently provides the tracer gas to a plurality of first flow channels. This improves flexibility of the gas releaser and further improves leakage detection efficiency.

According to the first aspect or the first to the third implementations of the first aspect of this application, in a fourth implementation of this application, the leakage detection apparatus further includes a support rack, and a first slide rail and a second slide rail that are disposed on the support rack, the gas releaser is movably connected to the first slide rail, and the gas sensor is slidably disposed on the second slide rail. The gas releaser moves, by using the first slide rail, along the side surface of the heat exchanger core that is provided with the first flow channel, and the gas sensor can move, by using the second slide rail, along the side surface of the heat exchanger core that is provided with the second flow channel. This simplifies a structure of the leakage detection apparatus.

According to the first aspect or the first to the fourth implementations of the first aspect of this application, in a fifth implementation of this application, the leakage detection apparatus further includes a first fan; and the controller is further configured to control a rotation speed of the first fan when the gas sensor detects the tracer gas concentration in the second flow channel of the heat exchanger core, to control a tracer gas diffusion speed in the second flow channel and improve a leakage detection effect.

According to the first aspect or the first to the fifth implementations of the first aspect of this application, in an sixth implementation of this application, the leakage detection apparatus further includes a second fan; and the controller is further configured to control a rotation speed of the second fan when the gas releaser provides the tracer gas to the first flow channel of the heat exchanger core, to control a tracer gas diffusion speed in the first flow channel and improve a leakage detection effect.

According to a second aspect, this application provides a leakage detection method as set out in claim 8.

### BRIEF DESCRIPTION OF DRAWINGS

FIG. 1 is a schematic diagram of a three-dimensional structure of a heat exchanger core according to an implementation of this application;
FIG. 2 is a schematic diagram of enlarging a partial area of the heat exchanger core shown in FIG. 1;
FIG. 3 is a schematic diagram of an application scenario in which a leakage detection apparatus performs leakage detection on a heat exchanger core according to an implementation of this application;
FIG. 4 is a schematic diagram of the leakage detection apparatus shown in FIG. 3 from another perspective when the leakage detection apparatus performs leakage detection on a heat exchanger core;
FIG. 5 is a schematic diagram of an application scenario in which a leakage detection apparatus performs leakage detection on a heat exchanger core according to an implementation of this application;
FIG. 6 is a schematic diagram of the leakage detection apparatus shown in FIG. 5 from another perspective when the leakage detection apparatus performs leakage detection on a heat exchanger core;
FIG. 7 is a flowchart of a leakage detection method according to a background example; and
FIG. 8 is a flowchart of another leakage detection method according to an implementation of this application.

### DESCRIPTION OF EMBODIMENTS

To make objectives, technical solutions, and advantages of this application more clearly, the following further describes this application in detail with reference to the accompanying drawings.

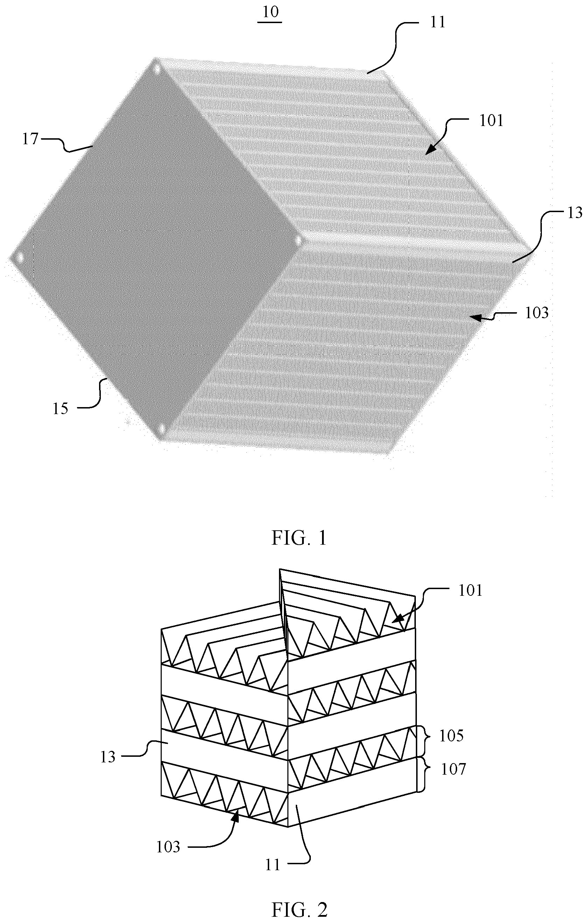

Refer to FIG. 1 and FIG. 2. A heat exchanger core 10 is a core component of an indirect cooling system (not shown in the figure), and a cross-heat exchange manner is used for the heat exchanger core 10. The heat exchanger core 10 is approximately of a cubic structure. The heat exchanger core 10 includes a first side surface 11, a second side surface 13, a third side surface 15, and a fourth side surface 17. The first side surface 11 is disposed oppositely to the third side surface 15, and the second side surface 13 is disposed oppositely to the fourth side surface 17. The heat exchanger core 10 further includes first flow channels 101 and second flow channels 103. An opening at one end of the first flow channel 101 runs through the first side surface 11, and an opening at the other end of the first flow channel 101 runs through the third side surface 15. An opening at one end of the second flow channel 103 runs through the second side surface 13, and an opening at the other end of the second flow channel 103 runs through the fourth side surface 17. The first flow channel 101 and the second flow channel 103 are used to circulate gas. For example, when the heat exchanger core 10 performs heat exchange, the first flow channel 101 is used to circulate gas (such as hot air) at a first temperature, and the second flow channel 103 is used to circulate gas (such as cold air) at a second temperature. In this way, heat can be exchanged between gas at different temperatures.

In this implementation, there are both a plurality of first flow channels 101 and a plurality of second flow channels 103. The heat exchanger core 10 further includes a plurality of first stack layers 105 and a plurality of second stack layers 107, and the plurality of first stack layers 105 and the plurality of second stack layers 107 are arranged alternately, namely, the plurality of first stack layers 105 and the plurality of second stack layers 107 are stacked in an arrangement manner of a first stack layer 105, a second stack layer 107, a first stack layer 105, and a second stack layer 107.... Each first stack layer 105 is provided with a plurality of parallel first flow channels 101, and each second stack layer 107 is provided with a plurality of parallel second flow channels 103. Both the first side surface 11 and the third side surface 15 are provided with openings of a plurality of first flow channels 101, and both the second side surface 13 and the fourth side surface 17 are provided with openings of a plurality of second flow channels 103.

Ideally, the first flow channel 101 and the second flow channel 103 are totally isolated from each other, that is, gas in the first flow channel 101 does not flow into the second flow channel 103, and/or gas in the second flow channel 103 does not flow into the first flow channel 101. In other words, no leakage point exists in the heat exchanger core 10. However, due to a factor such as a manufacturing technology or collision, leakage occurs between the first flow channel 101 and the second flow channel 103, namely, a leakage point exists in the heat exchanger core 10. Consequently, gas in the first flow channel 101 flows into the second flow channel 103, and/or gas in the second flow channel 103 flows into the first flow channel 101.

It may be understood that positions of the first flow channel 101 and the second flow channel 103 in the heat exchanger core 10 are not limited. A structure of the heat exchanger core 10 is not limited in this implementation of this application. For example, in some implementations, the heat exchanger core 10 is approximately cylindrical, provided that the heat exchanger core 10 is provided with the first flow channel 101 and the second flow channel 103 to implement heat exchange. A quantity of first flow channels 101 is not limited, and a quantity of second flow channels 103 is not limited.

Before delivery of the heat exchanger core 10, leakage detection usually needs to be performed on the heat exchanger core 10 by injecting water. For example, the first side surface 11 of the heat exchanger core 10 that is provided with the opening of the first flow channel 101 is encapsulated through tooling, and water is injected, through pressurization, into the third side surface 15 that is provided with the opening of the first flow channel 101. Then, it is observed whether water is leaked from, for example, the second flow channel 103, to detect whether leakage occurs between different flow channels of the heat exchanger core 10.

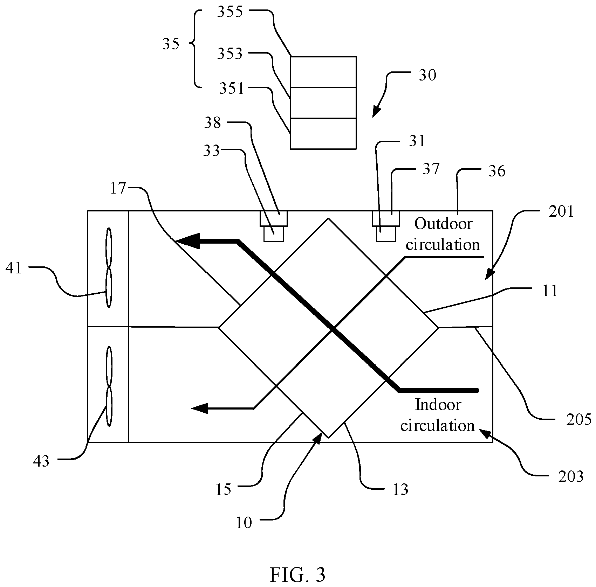

The heat exchanger core 10 is transported to a use site to complete mounting. Refer to FIG. 3. A separation wall 205 is disposed between first space 201 and second space 203, a mounting opening (not shown in the figure) is disposed on the separation wall 205, and the heat exchanger core 10 is mounted on the mounting opening (not shown in the figure). The first side surface 11 and the fourth side surface 17 are located in the first space 201, and the second side surface 13 and the third side surface 15 are located in the second space 203. The heat exchanger core 10 can circulate air between the first space 201 and the second space 203. For example, the first space 201 is open outdoor space, the second space 203 is closed indoor space, and the heat exchanger core 10 can discharge air in the second space 203 into the first space 201 (indoor circulation shown in FIG. 3), and input air in the first space 201 into the second space 203 (outdoor circulation shown in FIG. 3). Collision easily occurs in a transportation, mounting, or use process, and consequently a leakage point is easily generated on a sidewall of the first flow channel 101 and/or the second flow channel 103 of the heat exchanger core 10. Because mounting of the heat exchanger core 10 has been completed, the use site may limit leakage detection through water injection or prevent leakage detection through water injection from being performed. This affects leakage detection efficiency.

Based on this, refer to FIG. 3. A first implementation of this application provides a leakage detection apparatus 30, configured to detect whether a leakage point exists in a heat exchanger core 10. The leakage detection apparatus 30 includes a gas releaser 31, a gas sensor 33, and a controller 35. Both the gas releaser 31 and the gas sensor 33 are communicatively connected to the controller 35. The gas releaser 31 is configured to provide tracer gas to a first flow channel 101 of the heat exchanger core 10. The gas sensor 33 is configured to: detect a tracer gas concentration in a second flow channel 103 of the heat exchanger core 10, and feed back the tracer gas concentration to the controller 35. The controller 35 is configured to compare the tracer gas concentration with a concentration threshold. If the tracer gas concentration is greater than the concentration threshold, the controller 35 determines that a leakage point exists in the heat exchanger core 10. Tracer gas from the second flow channel 103 of the heat exchanger core 10 is tracer gas diffused and circulated in the second flow channel 103.

According to the leakage detection apparatus 30 provided in this implementation of this application, the gas releaser 31 provides the tracer gas (actively releases the tracer gas) to the first flow channel 101, so that the tracer gas is diffused and circulated in the first flow channel 101, and then the gas sensor 33 tracks and detects the tracer gas concentration in the second flow channel 103. If a leakage point exists in the heat exchanger core 10, the gas sensor 33 can detect the tracer gas concentration. If no leakage point exists in the heat exchanger core 10, the gas sensor 33 can detect no tracer gas.

The leakage detection apparatus 30 does not need to inject water into the heat exchanger core 10. Instead, the gas releaser 31 actively releases the tracer gas into the first flow channel 101, and then the gas sensor 33 automatically monitors the tracer gas concentration in the second flow channel 103 of the heat exchanger core 10. Therefore, the leakage detection apparatus 30 can still perform leakage detection on the heat exchanger core 10 on a use site of the heat exchanger core 10. This greatly facilitates leakage detection on the heat exchanger core 10 and improves leakage detection efficiency.

The gas sensor 33 detects the tracer gas concentration at a plurality of detection points. In this implementation, the detection point is a position of the gas sensor 33 when detecting the tracer gas concentration on a side surface (for example, a second side surface 13 and/or a fourth side surface 17) of the heat exchanger core 10 that is provided with an opening of the second flow channel 103. In other words, the gas sensor 33 is located outside the heat exchanger core 10, and detects a concentration of the tracer gas from the second flow channel 103. The controller 35 is further configured to compare a tracer gas concentration at each detection point with the concentration threshold. If a tracer gas concentration at one or more detection points is greater than the concentration threshold, the controller 35 determines that a leakage point exists in the heat exchanger core 10. It may be understood that there may be one or two detection points. This is not limited in this implementation of this application. In some implementations, the gas sensor 33 may alternatively detect a tracer gas concentration in each second flow channel 103.

Specifically, the leakage detection apparatus 30 further includes a support rack 36, a first slide rail 37, and a second slide rail 38. Both the first slide rail 37 and the second slide rail 38 are disposed on the support rack 36. In this implementation, the first slide rail 37 is located on a side on which a first side surface 11 of the heat exchanger core 10 is located, and the second slide rail 38 is located on a side on which the fourth side surface 17 of the heat exchanger core 10 is located.

The gas releaser 31 is slidably connected to the first slide rail 37 to move along the first side surface 11, so as to provide the tracer gas to a plurality of first flow channels 101 on the first side surface 11. In this way, flexibility of the gas releaser 31 is improved, and leakage detection efficiency is further improved.

The gas sensor 33 is slidably connected to the second slide rail 38 to move along the fourth side surface 17, so as to detect the tracer gas concentration in the second flow channel 103 on the fourth side 17. In other words, the gas sensor 33 is movably disposed on the side surface of the heat exchanger core 10 that is provided with the opening of the second flow channel 103, so that the gas sensor 33 conveniently performs detection at a plurality of detection points. This improves leakage detection flexibility and improves leakage detection efficiency.

The gas sensor 33 includes a sensing unit and a signal processing unit. The sensing unit is configured to generate a response signal that is linearly related to the tracer gas concentration. The signal processing unit is configured to perform processing such as background cancellation, noise reduction, amplification, filtering, and analog-to-digital conversion on the response signal to obtain the tracer gas concentration. The gas sensor 33 may detect the tracer gas concentration at different detection points in real time, at regular intervals, or at irregular intervals. The detection point is the position of the gas sensor 33 when detecting the tracer gas concentration on the side surface of the heat exchanger core 10 that is provided with the opening of the second flow channel 103. Because the gas sensor 33 can move along the fourth side surface 17 to increase a quantity of detection points of the gas sensor 33, leakage detection accuracy and flexibility are improved. It may be understood that a structure of the gas sensor 33 is not limited in this application, provided that the gas sensor 33 can detect the tracer gas concentration.

The gas releaser 31 is connected to the gas sensor 33 by using a linkage apparatus (not shown in the figure). In this way, when a position of the gas releaser 31 changes, a position of the detection point of the gas sensor 33 also changes. For example, when the gas releaser 31 moves to one first stack layer 105 to provide the tracer gas to a first flow channel 101 of the first stack layer 105, the gas sensor 33 moves to a second stack layer 107 adjacent to the first stack layer 105, and detects a tracer gas concentration in a second flow channel 103 of the second stack layer 107. This further improves leakage detection accuracy while facilitating control.

In this implementation, the tracer gas is helium, and the helium is easy to trace due to chemical inertness. It may be understood that a type of the tracer gas is not limited in this implementation of this application. For example, the tracer gas may be nitrogen.

The leakage detection apparatus 30 further includes a positioner 39. The positioner 39 is disposed on the gas sensor 33. The positioner 39 is configured to: find a position of each detection point of the gas sensor 33, and feed back the position to the controller 35. When determining that a leakage point exists in the heat exchanger core 10, the controller 35 is further configured to identify, as a position of the leakage point, a position of a detection point at which a tracer gas concentration is greater than the concentration threshold, that is, determine a position of the second flow channel 103 in which the leakage point exists. The positioner 39 may be a chip with a positioning system (for example, a global positioning system). In another implementation, the positioner 39 may be an infrared ranging sensor or the like. In this implementation, the concentration threshold is 0, and it may be understood that the concentration threshold may be adjusted as required.

In some implementations, the support rack 36, the first slide rail 37, and the second slide rail 38 may be omitted, the gas releaser 31 may move freely, the gas sensor 33 may move freely, and the positioner 39 is disposed on the gas sensor 33.

The leakage detection apparatus 30 further includes a first fan 41 and a second fan 43. The first fan 41 is configured to control a gas diffusion speed in the second flow channel 103. The first fan 41 is disposed in the first space 201. The controller 35 is further configured to control a rotation speed of the first fan 41 when the gas sensor 33 detects the tracer gas concentration in the second flow channel 103 of the heat exchanger core 10, so that the tracer gas is diffused at a proper speed in the second flow channel 103. For example, the controller 35 reduces the rotation speed of the first fan 41, so that the gas sensor 33 has enough time to detect the tracer gas concentration.

The second fan 43 is configured to control a gas diffusion speed in the first flow channel 101. The second fan 43 is disposed in the second space 203. The controller 35 is further configured to control a rotation speed of the second fan 43 when the gas releaser 31 provides the tracer gas to the first flow channel 101 of the heat exchanger core 10. For example, the controller 35 reduces the rotation speed of the second fan 43, so that the tracer gas has enough time to be diffused in the first flow channel 101, and can enter the second flow channel 103 by using the leakage point.

In this implementation, both the first fan 41 and the second fan 43 are blowers. When the heat exchanger core 10 performs heat exchange, the first fan 41 is configured to facilitate output of air in the second space 203 to the first space 201 through the second flow channel 103, to complete air circulation from the second space 203 to the first space 201. The second fan 43 is configured to facilitate input of air in the first space 201 to the second space 203 through the first flow channel 101, to complete air circulation from the first space 201 to the second space 203.

It may be understood that the controller 35 may control the rotation speeds of the first fan 41 and the second fan 43 based on environment factors, tracer gas, and the like of the first space 201 and the second space 203. The first fan 41 may be a blower or an exhaust fan, and the second fan 43 may be a blower or an exhaust fan.

More specifically, the controller 35 includes a storage unit 351, a processing unit 353, and a display unit 355. The storage unit 351 pre-stores a model of the heat exchanger core 10. In this implementation, the processing unit 353 is configured to: establish a relationship graph based on each detection point and a corresponding tracer gas concentration; and when a tracer gas concentration at one or more detection points is greater than the concentration threshold, determine that a leakage point exists in the heat exchanger core 10, and determine a position of the second flow channel 103 in which the leakage point exists. The processing unit 353 is further configured to control the display unit 355 to display a detection result based on the model of the heat exchanger core, to display the detection result graphically and facilitate viewing by a user. The detection result includes each detection point of the gas sensor 33 and the tracer gas concentration detected at each detection point. When determining that a leakage point exists in the heat exchanger core 10, the processing unit 353 further controls the display unit 355 to display alarm information, to prompt the user with the alarm information. The alarm information includes a position of the leakage point. It may be understood that a form of the alarm information is not limited in this application. For example, the alarm information may be a circular graphic, to circle the position, displayed by the display unit 355, of the second flow channel in which the leakage point exists and that is in the model of the heat exchanger core 10. In some implementations, the detection result further includes detection time corresponding to each detection point, and the like.

The storage unit 351 may be further configured to store a computer program and/or a module. The processing unit 353 implements various functions of the leakage detection apparatus 30 by running or executing the computer program and/or the module that are/is stored in the storage unit and invoking data stored in the storage unit. The storage unit may mainly include a program storage area and a data storage area. The program storage area may store an operating system, application programs required by a plurality of functions (such as a sound play function and an image play function), and the like. The data storage area may store data (for example, detection data) that is created based on use of the leakage detection apparatus 30, and the like. In addition, the storage unit may include a high-speed random access memory, and may further include a non-volatile memory such as a hard disk, a memory, a plug-connected hard disk, a smart media card (Smart Media Card, SMC), a secure digital (Secure Digital, SD) card, a flash card (Flash Card), a plurality of disk storage devices, a flash device, or another volatile solid-state storage device. The storage unit may exist independently, and is connected to the processing unit by using a communication bus. Alternatively, the storage unit 351 may be integrated with the processing unit 353.

The processing unit 353 may include one or more processors. The processor may be a central processing unit (Central Processing Unit, CPU), and may further be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic component, a discrete gate, a transistor logic device, or a discrete hardware component. The general-purpose processor may be a microprocessor, any conventional processor, or the like.

When the leakage detection apparatus 30 needs to perform leakage point detection on the heat exchanger core 10, the controller 35 controls the gas releaser 31 to provide the tracer gas to the first flow channel 101, and the controller 35 controls the gas sensor 33 to move and detect the tracer gas concentration at a plurality of detection points. The controller 35 obtains a position of each detection point and corresponding tracer gas concentration. The controller 35 compares the tracer gas concentration at each detection point with the concentration threshold. If a tracer gas concentration at one or more detection points is greater than the concentration threshold, the controller 35 determines (determines) that a leakage point exists in the heat exchanger core 10. The controller 35 identifies, as a position of the leakage point, a position of a detection point at which a tracer gas concentration is greater than the concentration threshold, namely, the controller 35 determines a position of the second flow channel 103 in which the leakage point exists. If the tracer gas concentrations at all the detection points is less than the concentration threshold, the controller 35 determines that no leakage point exists in the heat exchanger core 10.

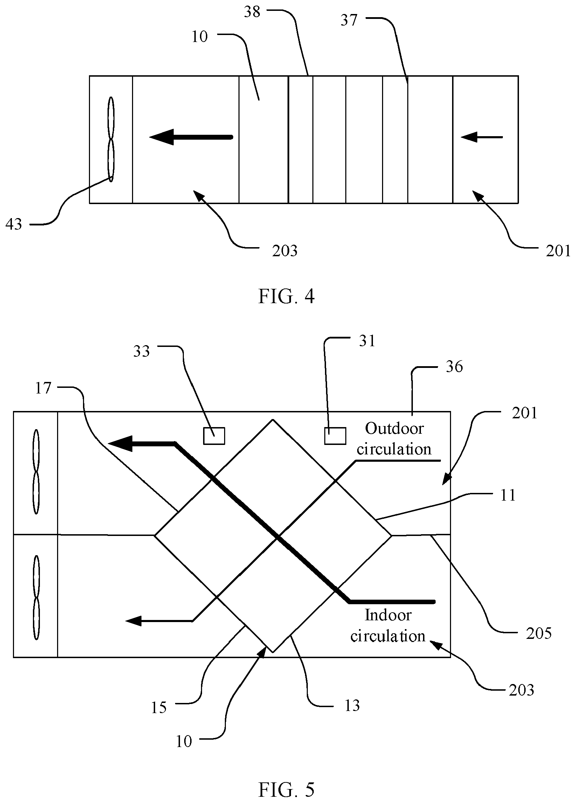

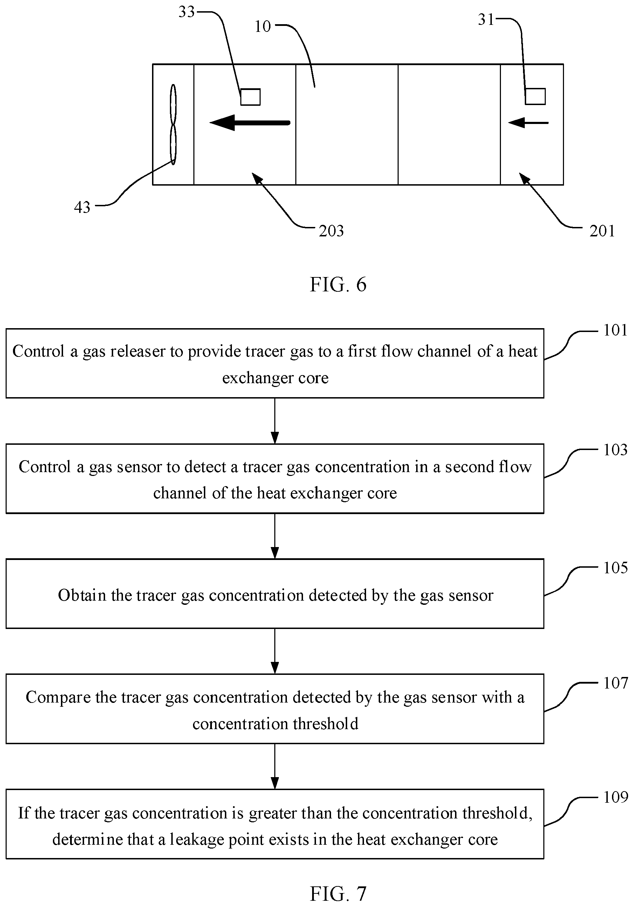

In some implementations, refer to FIG. 5 and FIG. 6. The positioner and the slide rails in the leakage detection apparatus 30 may be omitted. The gas releaser 31 is disposed on a side on which a side surface of the heat exchanger core 10 that is provided with the first flow channel (not shown in the figure) is located. The gas sensor 33 is disposed on a side on which the side surface of the heat exchanger core 10 that is provided with the second flow channel (not shown in the figure) is located. For example, the first side surface 11 and the fourth side surface 17 are located in the first space 201, the second side surface 13 and the third side surface 17 are located in the second space 203, the gas releaser 31 is disposed on the side on which the first side surface 11 of the heat exchanger core 10 is located, the gas sensor 33 is located on the side on which the fourth side surface 17 of the heat exchanger core 10 is located, and both the gas releaser 31 and the gas sensor 33 are located in the first space 201. The gas sensor 33 is configured to detect the tracer gas concentration in the second flow channel 103 at a plurality of detection points. The controller 35 is further configured to record detection time of the gas sensor 33 at each detection point. When determining that a leakage point exists in the heat exchanger core 10, the controller 35 is further configured to determine, based on tracer gas concentrations at the plurality of detection points and corresponding detection time, a position of the second flow channel in which the leakage point exists. More specifically, the controller 35 may establish, based on the tracer gas concentrations at the plurality of detection points and the corresponding detection time, a relational model in which a tracer gas concentration varies with time. The controller 35 may calculate a distance between detection points based on a speed at which the tracer gas is diffused in the second flow channel 103 and tracer gas diffusion time at different detection points, to obtain the position of the second flow channel 103 in which the leakage point exists.

In some implementations, the positioner 39 in the leakage detection apparatus 30 may be omitted, and there are a plurality of gas sensors 35. The plurality of gas sensors 35 are distributed on the side surface of the heat exchanger core 10 that is provided with the second flow channel 103. A position of each gas sensor 33 on the side surface that is provided with the second flow channel 103 is a detection point. The storage unit 351 pre-stores a position of a detection point at which each gas sensor 33 is located. When the processing unit 353 determines that a leakage point exists in the heat exchanger core 10, a position of a detection point at which a tracer gas concentration is greater than the concentration threshold is identified as a position of the second flow channel 103 in which the leakage point exists.

FIG. 7. shows a background example of a leakage detection method, used to detect whether a leakage point exists in a heat exchanger core. The leakage detection method may be performed by the leakage detection apparatus 30. The leakage detection method includes the following steps:
Step 101. Control a gas releaser 31 to provide tracer gas to a first flow channel 101 of a heat exchanger core 10. In this implementation, the tracer gas is helium. In another implementation, the tracer gas may be other gas that facilitates tracing, for example, hydrogen or nitrogen.
Step 103. Control a gas sensor 33 to detect a tracer gas concentration in a second flow channel 103 of the heat exchanger core 10.
Step 105. Obtain the tracer gas concentration detected by the gas sensor 33.
Step 107. Compare the tracer gas concentration detected by the gas sensor 33 with a concentration threshold.
Step 109. If the tracer gas concentration is greater than the concentration threshold, determine that a leakage point exists in the heat exchanger core 10.

The controlling a gas sensor 33 to detect a tracer gas concentration in a second flow channel 103 of the heat exchanger core 10 includes: controlling the gas sensor 33 to detect the tracer gas concentration at a plurality of detection points, where the detection point is a position of the gas sensor 33 when detecting the tracer gas concentration on a side surface of the heat exchanger core 10 that is provided with an opening of the second flow channel 103.

The leakage detection method further includes: finding a position of the detection point of the gas sensor 33, where the detection point is the position of the gas sensor 33 when detecting the tracer gas concentration on the side surface of the heat exchanger core 10 that is provided with the opening of the second flow channel 103. After the determining that a leakage point exists in the heat exchanger core 10, the leakage detection method further includes: identifying, as a position of the leakage point, a position of a detection point at which a detected tracer gas concentration is greater than the concentration threshold, to determine a position of the second flow channel 103 in which the leakage point exists.

The leakage detection method further includes: recording detection time at which the gas sensor 33 detects the tracer gas concentration at each detection point. After the determining that a leakage point exists in the heat exchanger core, the leakage detection method further includes: determining, based on tracer gas concentrations at the plurality of detection points and detection time at the plurality of detection points, a position of the second flow channel in which the leakage point exists.

The leakage detection method further includes: controlling a rotation speed of a first fan 41 to control a tracer gas diffusion speed in the second flow channel 103, or controlling a rotation speed of a second fan 43 to control a tracer gas diffusion speed in the first flow channel 101.

It may be understood that a sequence of the steps of the leakage detection method is not limited. For example, step 101, step 103, and step 105 may be performed simultaneously.

It may be understood that the leakage detection method may be implemented by another device or apparatus.

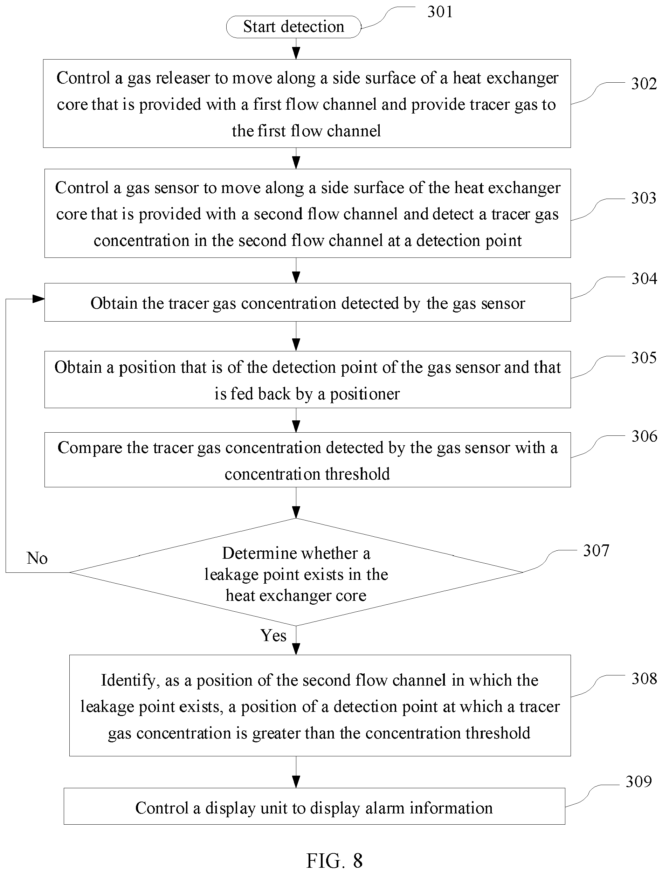

Refer to FIG. 8. An implementation of this application further provides another leakage detection method, used to detect whether a leakage point exists in a heat exchanger core. The leakage detection method may be performed by the leakage detection apparatus 30. The leakage detection method includes the following steps:
Step 301. Start detection.
Step 302. Control a gas releaser 31 to move along a side surface of a heat exchanger core 10 that is provided with a first flow channel 101 and provide tracer gas to the first flow channel 101.
Step 303. Control a gas sensor 33 to move along a side surface of the heat exchanger core 10 that is provided with a second flow channel 103 and detect a tracer gas concentration in the second flow channel 103 at a detection point.
Step 304. Obtain the tracer gas concentration detected by the gas sensor 33.
Step 305. Obtain a position that is of the detection point of the gas sensor 33 and that is fed back by a positioner 39.
Step 306. Compare the tracer gas concentration detected by the gas sensor 33 with a concentration threshold.
Step 307. Determine whether a leakage point exists in the heat exchanger core 10; and if determining that a leakage point exists in the heat exchanger core 10 (namely, if yes), perform step 308; or if determining that no leakage point exists in the heat exchanger core 10 (namely, if no), return to step 304.
Step 308. Identify, as a position of the second flow channel 103 in which the leakage point exists, a position of a detection point at which a tracer gas concentration is greater than the concentration threshold.
Step 309. Control a display unit 355 to display alarm information, where the alarm information includes the position of the second flow channel 103 in which the leakage point exists.

It may be understood that, in some implementations, a sequence of the steps of the leakage detection method is not limited. For example, step 302, step 303, and step 305 may be performed simultaneously.

It should be understood that expressions such as "include" and "may include" that may be used in this application indicate existence of a disclosed function, operation, or element, and do not limit one or more additional functions, operations, and elements. In this application, terms such as "include" and/or "have" may be interpreted to indicate a particular characteristic, quantity, operation, element, or component, or a combination thereof, but cannot be interpreted to exclude existence or an addition possibility of one or more other characteristics, quantities, operations, elements, or components, or a combination thereof.

In addition, in this application, an expression "and/or" includes any and all combinations of associated listed words. For example, the expression "A and/or B" may include the following three cases: A may be included, B may be included, or both A and B may be included.

In this application, expressions including ordinal numbers such as "first" and "second" may modify elements. However, the element is not limited by the foregoing expression. For example, the foregoing expression does not limit a sequence and/or importance of the element. The foregoing expression is only used to distinguish one element from another element. For example, although both first user equipment and second user equipment are user equipment, the first user equipment and the second user equipment indicate different user equipment. Similarly, without departing from the scope of this application, a first element may be referred to as a second element, and similarly, the second element may also be referred to as the first element.

When a component "connects to" or "accesses" another component, it should be understood that the component directly connects to or accesses the another component, and another component may further exist between the component and the another component. In another aspect, when a component "directly connects to" or "directly accesses" another component, it should be understood that no component exists between the component and the another component.

The foregoing descriptions are merely specific implementations of this application, but are not intended to limit the protection scope of this application. Therefore, the protection scope of this application shall be subject to the protection scope of the claims.

## Claims

1. A leakage detection apparatus (30), wherein the leakage detection apparatus comprises a gas releaser (31), a gas sensor (33), and a controller (35), both the gas releaser and the gas sensor are communicatively connected to the controller, the gas releaser (31) is configured to provide tracer gas to a first flow channel (101) of a heat exchanger core (10), the gas sensor (33) is configured to detect a tracer gas concentration in a second flow channel (103) of the heat exchanger core and feed back the tracer gas concentration to the controller, the controller is configured to compare the tracer gas concentration detected by the gas sensor with a concentration threshold, and if the tracer gas concentration is greater than the concentration threshold, the controller determines that a leakage point exists in the heat exchanger core (10),
wherein there are a plurality of detection points at which the gas sensor (33) detects the tracer gas concentration, **characterized in that** the detection point is a position of the gas sensor when detecting the tracer gas concentration on a side surface (13, 17) of the heat exchanger core (10) that is provided with an opening of the second flow channel (103); and when at least one of tracer gas concentrations at the plurality of detection points is greater than the concentration threshold, the controller (35) determines that a leakage point exists in the heat exchanger core,
wherein the leakage detection apparatus further comprises a positioner (39) disposed on the gas sensor (33), and the positioner is configured to: find a position of the detection point of the gas sensor, and feed back the position to the controller (35); and
the controller is further configured to identify, as a position of the leakage point, a position of a detection point at which a detected tracer gas concentration is greater than the concentration threshold, to determine a position of the second flow channel (103) in which the leakage point exists.

2. The leakage detection apparatus according to claim 1, wherein the controller (35) is further configured to record detection time at which the gas sensor (33) detects the tracer gas concentration at each detection point; and
when determining that a leakage point exists in the heat exchanger core (10), the controller is further configured to determine, based on the tracer gas concentrations at the plurality of detection points and detection time at the plurality of detection points, a position of the second flow channel (103) in which the leakage point exists.cc

3. The leakage detection apparatus according to claim 1, wherein the controller (35) is further configured to control the gas sensor (33) to move on the side surface of the heat exchanger core (10) that is provided with the opening of the second flow channel (103).

4. The leakage detection apparatus according to claim 3, wherein the controller (35) is further configured to control the gas releaser (31) to move on a side surface of the heat exchanger core (10) that is provided with an opening of the first flow channel (101).

5. The leakage detection apparatus according to claim 4, wherein the leakage detection apparatus further comprises a support rack (36), and a first slide rail (37) and a second slide rail (38) that are disposed on the support rack, the gas releaser (31) is movably connected to the first slide rail, and the gas sensor (33) is slidably disposed on the second slide rail.

6. The leakage detection apparatus according to claim 1, wherein the leakage detection apparatus further comprises a first fan (41); and
the controller (35) is further configured to control a rotation speed of the first fan when the gas sensor (33) detects the tracer gas concentration in the second flow channel (103) of the heat exchanger core (10).

7. The leakage detection apparatus according to claim 1, wherein the leakage detection apparatus further comprises a second fan (43); and
the controller (35) is further configured to control a rotation speed of the second fan when the gas releaser (31) provides the tracer gas to the first flow channel (101) of the heat exchanger core (10).

8. A leakage detection method, used to detect whether a leakage point exists in a heat exchanger core (10), and comprising the following steps:
controlling a gas releaser (31) to provide tracer gas to a first flow channel (101) of the heat exchanger core (10);
controlling a gas sensor (33) to detect a tracer gas concentration in a second flow channel (103) of the heat exchanger core;
obtaining the tracer gas concentration detected by the gas sensor;
comparing the tracer gas concentration detected by the gas sensor with a concentration threshold; and
if the tracer gas concentration is greater than the concentration threshold, determining that a leakage point exists in the heat exchanger core,
wherein the controlling a gas sensor (33) to detect a tracer gas concentration in a second flow channel (103) of the heat exchanger core (10) comprises: controlling the gas sensor to detect the tracer gas concentration at a plurality of detection points, **characterized in that** the detection point is a position of the gas sensor when detecting the tracer gas concentration on a side surface (13, 17) of the heat exchanger core (10) that is provided with an opening of the second flow channel (103),
wherein the leakage detection method further comprises: finding a position of the detection point of the gas sensor (33), wherein the detection point is the position of the gas sensor when detecting the tracer gas concentration on the side surface of the heat exchanger core (10) that is provided with the opening of the second flow channel (103); and
after the determining that a leakage point exists in the heat exchanger core (10), the leakage detection method further comprises: identifying, as a position of the leakage point, a position of a detection point at which a detected tracer gas concentration is greater than the concentration threshold, to determine a position of the second flow channel (103) in which the leakage point exists.

9. The leakage detection method according to claim 8, wherein the leakage detection method further comprises: recording detection time at which the gas sensor (33) detects the tracer gas concentration at each detection point; and after the determining that a leakage point exists in the heat exchanger core (10), the leakage detection method further comprises: determining, based on tracer gas concentrations at the plurality of detection points and detection time at the plurality of detection points, a position of the second flow channel (103) in which the leakage point exists.

10. The leakage detection method according to claim 8, wherein the leakage detection method further comprises: controlling a rotation speed of a first fan (41) to control a tracer gas diffusion speed in the second flow channel (103), or controlling a rotation speed of a second fan (43) to control a tracer gas diffusion speed in the first flow channel (101).

## Patentansprüche

1. Leckagedetektionsvorrichtung (30), wobei die Leckagedetektionsvorrichtung einen Gasfreisetzer (31), einen Gassensor (33) und eine Steuerung (35) umfasst, wobei sowohl der Gasfreisetzer als auch der Gassensor kommunikativ mit der Steuerung verbunden sind, der Gasfreisetzer (31) dazu konfiguriert ist, einem ersten Strömungskanal (101) eines Wärmetauscherkerns (10) Prüfgas zuzuführen, und der Gassensor (33) dazu konfiguriert ist, eine Spürgaskonzentration in einem zweiten Strömungskanal (103) des Wärmetauscherkerns zu detektieren und die Prüfgaskonzentration an die Steuerung zurückzuführen, wobei die Steuerung dazu konfiguriert ist, die durch den Gassensor detektierte Prüfgaskonzentration mit einem Konzentrationsschwellenwert zu vergleichen, und wenn die Spürgaskonzentration größer als der Konzentrationsschwellenwert ist, die Steuerung bestimmt, dass im Wärmetauscherkern (10) ein Leckagepunkt vorliegt,
wobei eine Vielzahl von Detektionspunkten vorhanden ist, an welcher der Gassensor (33) die Prüfgaskonzentration detektiert, **dadurch gekennzeichnet, dass**
der Detektionspunkt eine Position des Gassensors beim Detektieren der Prüfgaskonzentration auf einer Seitenfläche (13, 17) des Wärmetauscherkerns (10) liegt, die mit einer Öffnung des zweiten Strömungskanals (103) versehen ist; und wenn mindestens eine der Prüfgaskonzentrationen an der Vielzahl von Detektionspunkten größer als der Konzentrationsschwellenwert ist, die Steuerung (35) bestimmt, dass im Wärmetauscherkern ein Leckagepunkt vorliegt.
wobei die Leckagedetektionsvorrichtung ferner einen Positionierer (39) umfasst, der an dem Gassensor (33) angeordnet ist, und der Positionierer zu Folgendem konfiguriert: Finden einer Position des Detektionspunkts des Gassensors und Rückmelden der Position an die Steuerung (35); und
die Steuerung ferner dazu konfiguriert ist, als Position des Leckagepunkts eine Position eines Detektionspunkts zu identifizieren, an dem eine detektierte Prüfgaskonzentration größer als der Konzentrationsschwellenwert ist, um eine Position des zweiten Strömungskanals (103) zu bestimmen, an der dem Leckagepunkt vorliegt.

2. Leckagedetektionsvorrichtung gemäß Anspruch 1, wobei die Steuerung (35) ferner dazu konfiguriert ist, die Detektionszeit aufzuzeichnen, zu der der Gassensor (33) die Prüfgaskonzentration an jedem Detektionspunkt erkennt; und wenn bestimmt wird, dass ein Leckagepunkt im Wärmetauscherkern (10) vorhanden ist, ist die Steuerung ferner dazu konfiguriert ist, basierend auf den Prüfgaskonzentrationen an der Vielzahl von Detektionspunkten und der Detektionszeit an der Vielzahl von Erkennungspunkten eine Position des zweiten Strömungskanals (103) zu bestimmen, in der sich der Leckagepunkt befindet.

3. Leckagedetektionsvorrichtung gemäß Anspruch 1, wobei die Steuerung (35) ferner dazu konfiguriert ist, den Gassensor (33) so zu steuern, dass er sich auf der Seitenfläche des Wärmetauscherkerns (10) bewegt, die mit der Öffnung des zweiten Strömungskanals (103) versehen ist.

4. Leckagedetektionsvorrichtung gemäß Anspruch 3, wobei die Steuerung (35) ferner dazu konfiguriert ist, den Gasfreisetzer (31) so zu steuern, dass er sich auf der Seitenfläche des Wärmetauscherkerns (10) bewegt, die mit einer Öffnung des ersten Strömungskanals (101) versehen ist.

5. Leckagedetektionsvorrichtung gemäß Anspruch 4, wobei die Leckagedetektionsvorrichtung ferner ein Trägergestell (36) und eine erste Gleitschiene (37) und eine zweite Gleitschiene (38) umfasst, die auf dem Trägergestell angeordnet sind, wobei der Gasfreisetzer (31) beweglich mit der ersten Gleitschiene verbunden ist und der Gassensor (33) verschiebbar auf der zweiten Gleitschiene angeordnet ist.

6. Leckagedetektionsvorrichtung gemäß Anspruch 1, wobei die Leckagedetektionsvorrichtung ferner einen ersten Lüfter (41) umfasst; und
die Steuerung (35) ferner dazu konfiguriert ist, eine Drehzahl des ersten Lüfters zu steuern, wenn der Gassensor (33) die Prüfgaskonzentration im zweiten Strömungskanal (103) des Wärmetauscherkerns (10) detektiert.

7. Leckagedetektionsvorrichtung gemäß Anspruch 1, wobei die Leckagedetektionsvorrichtung ferner einen zweiten Lüfter (43) umfasst; und
die Steuerung (35) ferner dazu konfiguriert ist, eine Drehzahl des zweiten Lüfters zu steuern, wenn der Gasfreisetzer (31) das Prüfgas dem ersten Strömungskanal (101) des Wärmetauscherkerns (10) zuführt.

8. Leckagedetektionsverfahren, das dazu verwendet wird, zu detektieren, ob in einem Wärmetauscherkern (10) ein Leckagepunkt vorhanden ist, und das die folgenden Schritte umfasst:
Steuern eines Gasfreisetzers (31), um einem ersten Strömungskanal (101) des Wärmetauscherkerns (10) Prüfgas zuzuführen;
Steuern eines Gassensors (33), um eine Prüfgaskonzentration in einem zweiten Strömungskanal (103) des Wärmetauscherkerns zu detektieren;
Erhalten der durch den Gassensor detektierten Prüfgaskonzentration;
Vergleichen der durch den Gassensor detektierten Prüfgaskonzentration mit einem Konzentrationsschwellenwert; und
wenn die Konzentration des Prüfgases über dem Konzentrationsschwellenwert liegt, Bestimmen, dass ein Leckagepunkt im Wärmetauscherkern vorliegt,
wobei das Steuern eines Gassensors (33) zum Detektieren einer Prüfgaskonzentration in einem zweiten Strömungskanal (103) des Wärmetauscherkerns (10) Folgendes umfasst: Steuern des Gassensors zum Detektieren der Prüfgaskonzentration an einer Vielzahl von Detektionspunkten, **dadurch gekennzeichnet, dass** der Detektionspunkt eine Position des Gassensors beim Detektieren der Spürgaskonzentration an einer mit einer Öffnung des zweiten Strömungskanals (103) versehenen Seitenfläche (13, 17) des Wärmetauscherkerns (10) ist,
wobei das Leckagedetektionsverfahren ferner umfasst: Finden einer Position des Detektionspunkts des Gassensors (33), wobei der Detektionspunkt die Position des Gassensors beim Detektieren der Spürgaskonzentration auf der Seitenfläche des Wärmetauscherkerns ist ( 10), der mit der Öffnung des zweiten Strömungskanals (103) versehen ist; und
nach dem Bestimmen, dass im Wärmetauscherkern (10) ein Leckagepunkt vorhanden ist, das Leckagedetektionsverfahren ferner Folgendes umfasst: Identifizieren einer Position eines Detektionspunkts, an der eine detektierte Prüfgaskonzentration größer ist, als Position des Leckagepunkts der Konzentrationsschwelle, um eine Position des zweiten Strömungskanals (103) zu bestimmen, an dem der Leckagepunkt vorliegt.

9. Leckagedetektionsverfahren gemäß Anspruch 8, wobei das Leckagedetektionsverfahren ferner Folgendes umfasst: Aufzeichnen der Detektionszeit, zu der der Gassensor (33) die Prüfgaskonzentration an jedem Detektionspunkt detektiert; und wobei nach dem Bestimmen, dass ein Leckagepunkt im Wärmetauscherkern (10) vorhanden ist, das Leckagedetektionsverfahren ferner umfasst: Bestimmen einer Position basierend auf der Prüfgaskonzentrationen an der Vielzahl von Detektionspunkten und der Detektionszeit an der Vielzahl von Detektionspunkten des zweiten Strömungskanals (103), in dem sich die Leckagestelle befindet.

10. Leckagedetektionsverfahren gemäß Anspruch 8, wobei das Leckagedetektionsverfahren ferner Folgendes umfasst: Steuern einer Drehzahl eines ersten Lüfters (41), um eine Spürgasdiffusionsgeschwindigkeit im zweiten Strömungskanal (103) zu steuern, oder Steuern einer Drehzahl eines zweiten Lüfters (43), um eine Spürgasdiffusionsgeschwindigkeit im ersten Strömungskanal (101) zu steuern.

## Revendications

1. Appareil de détection de fuite (30), dans lequel l'appareil de détection de fuite comprend un libérateur de gaz (31), un capteur de gaz (33) et un dispositif de commande (35), le libérateur de gaz et le capteur de gaz sont tous deux connectés en communication au dispositif de commande, le libérateur de gaz (31) est configuré pour fournir un gaz traceur à un premier canal d'écoulement (101) d'un noyau d'échangeur de chaleur (10), le capteur de gaz (33) est configuré pour détecter une concentration de gaz traceur dans un second canal d'écoulement (103) du noyau d'échangeur de chaleur et revoyer la concentration de gaz traceur au dispositif de commande, le dispositif de commande est configuré pour comparer la concentration de gaz traceur détectée par le capteur de gaz avec un seuil de concentration, et si la concentration de gaz traceur est supérieure à la concentration seuil, le dispositif de commande détermine qu'un point de fuite existe dans le noyau d'échangeur de chaleur (10),
dans lequel il existe une pluralité de points de détection auxquels le capteur de gaz (33) détecte la concentration de gaz traceur, **caractérisé en ce que**
le point de détection est une position du capteur de gaz lors de la détection de la concentration de gaz traceur sur une surface latérale (13, 17) du noyau d'échangeur de chaleur (10) qui est pourvue d'une ouverture du second canal d'écoulement (103) ; et lorsqu'au moins une des concentrations de gaz traceur au niveau de la pluralité de points de détection est supérieure au seuil de concentration, le dispositif de commande (35) détermine qu'il existe un point de fuite dans le noyau d'échangeur de chaleur,
dans lequel l'appareil de détection de fuite comprend également un positionneur (39) disposé sur le capteur de gaz (33), et le positionneur est configuré pour : trouver une position du point de détection du capteur de gaz, et renvoyer la position au dispositif de commande (35) ; et
le dispositif de commande est également configuré pour identifier, en tant que position du point de fuite, une position d'un point de détection auquel une concentration de gaz traceur détectée est supérieure au seuil de concentration, afin de déterminer une position du second canal d'écoulement (103) dans lequel le point de fuite existe.

2. Appareil de détection de fuite selon la revendication 1, dans lequel le dispositif de commande (35) est également configuré pour enregistrer le temps de détection auquel le capteur de gaz (33) détecte la concentration de gaz traceur à chaque point de détection ; et
lors de la détermination de l'existence d'un point de fuite dans le noyau d'échangeur de chaleur (10), le dispositif de commande est également configuré pour déterminer, sur la base des concentrations de gaz traceur au niveau de la pluralité de points de détection et du temps de détection au niveau de la pluralité de points de détection, une position du second canal d'écoulement (103) dans lequel le point de fuite existe.

3. Appareil de détection de fuite selon la revendication 1, dans lequel le dispositif de commande (35) est également configuré pour commander au capteur de gaz (33) de se déplacer sur la surface latérale du noyau d'échangeur de chaleur (10) qui est pourvue de l'ouverture du second canal d'écoulement (103).

4. Appareil de détection de fuite selon la revendication 3, dans lequel le dispositif de commande (35) est également configuré pour commander au libérateur de gaz (31) de se déplacer sur une surface latérale du noyau d'échangeur de chaleur (10) qui est pourvue d'une ouverture du premier canal d'écoulement (101).

5. Appareil de détection de fuite selon la revendication 4, dans lequel l'appareil de détection de fuite comprend également un bâti de support (36), et un premier rail coulissant (37) et un second rail coulissant (38) qui sont disposés sur le bâti de support, le libérateur de gaz (31) est connecté de manière mobile au premier rail coulissant, et le capteur de gaz (33) est disposé de manière coulissante sur le second rail coulissant.

6. Appareil de détection de fuite selon la revendication 1, dans lequel l'appareil de détection de fuite comprend également un premier ventilateur (41) ; et
le dispositif de commande (35) est également configuré pour commander une vitesse de rotation du premier ventilateur lorsque le capteur de gaz (33) détecte la concentration de gaz traceur dans le second canal d'écoulement (103) du noyau d'échangeur de chaleur (10).

7. Appareil de détection de fuite selon la revendication 1, dans lequel l'appareil de détection de fuite comprend également un second ventilateur (43) ; et
le dispositif de commande (35) est également configuré pour commander une vitesse de rotation du second ventilateur lorsque le libérateur de gaz (31) fournit le gaz traceur au premier canal d'écoulement (101) du noyau d'échangeur de chaleur (10).

8. Procédé de détection de fuite, utilisé pour détecter s'il existe un point de fuite dans un noyau d'échangeur de chaleur (10), et comprenant les étapes suivantes :
commande d'un libérateur de gaz (31) pour fournir un gaz traceur à un premier canal d'écoulement (101) du noyau d'échangeur de chaleur (10) ;
commande d'un capteur de gaz (33) pour détecter une concentration de gaz traceur dans un second canal d'écoulement (103) du noyau d'échangeur de chaleur ;
obtention de la concentration de gaz traceur détectée par le capteur de gaz ;
comparaison de la concentration de gaz traceur détectée par le capteur de gaz avec un seuil de concentration ; et
si la concentration de gaz traceur est supérieure au seuil de concentration, détermination qu'il existe un point de fuite dans le noyau d'échangeur de chaleur,
dans lequel la commande d'un capteur de gaz (33) pour détecter une concentration de gaz traceur dans un second canal d'écoulement (103) du noyau d'échangeur de chaleur (10) comprend : la commande du capteur de gaz pour détecter la concentration de gaz traceur au niveau d'une pluralité de points de détection, **caractérisé en ce que**
le point de détection est une position du capteur de gaz lors de la détection de la concentration de gaz traceur sur une surface latérale (13, 17) du noyau d'échangeur de chaleur (10) qui est pourvue d'une ouverture du second canal d'écoulement (103),
dans lequel le procédé de détection de fuite comprend également : la recherche d'une position du point de détection du capteur de gaz (33), dans lequel le point de détection est la position du capteur de gaz lors de la détection de la concentration de gaz traceur sur la surface latérale du noyau d'échangeur de chaleur (10) qui est pourvue de l'ouverture du second canal d'écoulement (103) ; et
après la détermination qu'un point de fuite existe dans le noyau d'échangeur de chaleur (10), le procédé de détection de fuite comprend également : l'identification, en tant que position du point de fuite, d'une position d'un point de détection à laquelle une concentration de gaz traceur détectée est supérieure au seuil de concentration, pour déterminer une position du second canal d'écoulement (103) dans lequel le point de fuite existe.

9. Procédé de détection de fuite selon la revendication 8, dans lequel le procédé de détection de fuite comprend également : l'enregistrement d'un temps de détection auquel le capteur de gaz (33) détecte la concentration de gaz traceur au niveau de chaque point de détection ; et après la détermination qu'un point de fuite existe dans le noyau d'échangeur de chaleur (10), le procédé de détection de fuite comprend également : la détermination, sur la base des concentrations de gaz traceur au niveau de la pluralité de points de détection et du temps de détection au niveau de la pluralité de points de détection, d'une position du second canal d'écoulement (103) dans lequel le point de fuite existe.

10. Procédé de détection de fuite selon la revendication 8, dans lequel le procédé de détection de fuite comprend également : la commande d'une vitesse de rotation d'un premier ventilateur (41) pour commander une vitesse de diffusion de gaz traceur dans le second canal d'écoulement (103), ou la commande d'une vitesse de rotation d'un second ventilateur (43) pour commander une vitesse de diffusion de gaz traceur dans le premier canal d'écoulement (101).
